# EUROPEAN PATENT APPLICATION

(11) **EP 4 607 671 A1**
(43) Date of publication of application: **27.08.2025**
(21) Application number: 23881714.2
(22) Date of filing: 18.10.2023
(51) Int. Cl.: H01M 50/244, H01M 50/249, H01M 10/6568

(54) **BATTERY, ENERGY STORAGE APPARATUS AND ELECTRIC DEVICE**

(30) Priority: 28.10.2022 CN 202222876386 U
(71) Applicant: Contemporary Amperex Technology (Hong Kong) Limited, Central (HK)
(72) Inventor: YANG, Hui, Ningde, Fujian 352100 (CN); WANG, Yong, Ningde, Fujian 352100 (CN); QIN, Lun, Ningde, Fujian 352100 (CN)
(74) Representative: Ziebig Hengelhaupt Intellectual Property Attorneys Patentanwaltskanzlei PartGmbB
(86) International application number: PCT/CN2023/125239
(87) International publication number: WO 2024/088136

(57) **Abstract**

Disclosed in the present application are a battery, an energy storage apparatus, and an electric device. The battery includes a battery cell, a first box, a second box, and a flow channel, where the first box and the second box are connected to each other so as to jointly define a closed space used for accommodating the battery cell; and the flow channel is configured to accommodate a heat exchange medium so as to adjust the temperature of the battery cell. The battery further includes an inlet tube and an outlet tube, where the inlet tube and the outlet tube are both in communication with the flow channel; and the inlet tube and the outlet tube are both located on a side of the first box facing the second box and outside the closed space. The technical solution provided in the present application can increase the energy density of the battery.

## Description

### CROSS REFERENCE TO RELATED APPLICATIONS

The present application claims priority to Chinese Patent Application No. 202222876386.5 entitled "Battery, Energy Storage Apparatus, and Electric Device" filed on October 28, 2022, which is incorporated herein by reference in its entirety.

### TECHNICAL FIELD

The present application relates to the technical field of batteries, and in particular, to a battery, an energy storage apparatus, and an electric device.

### BACKGROUND

Energy saving and emission reduction is a key to sustainable development of the automotive industry, and electric vehicles are an important component of the sustainable development of the automotive industry due to energy saving and environmental advantages thereof. For electric vehicles, battery technologies are an important factor in development thereof.

In the development of battery technologies, how to increase energy density of a battery is a technical problem to be solved in the battery technologies.

### SUMMARY

The present application provides a battery, an energy storage apparatus, and an electric device, and the technical solution provided in the present application can increase the energy density of the battery.

The present application is implemented through the following technical solutions:
According to a first aspect, the present application provides a battery, comprising a battery cell, a first box, a second box, and a flow channel, wherein the first box and the second box are connected to each other so as to jointly define a closed space used for accommodating the battery cell; and the flow channel is configured to accommodate a heat exchange medium so as to adjust the temperature of the battery cell. The battery further comprises an inlet tube and an outlet tube, wherein the inlet tube and the outlet tube are both in communication with the flow channel; and the inlet tube and the outlet tube are both located on a side of the first box facing the second box and outside the closed space.

In the above solution, the inlet tube and the outlet tube of the battery are located outside the closed space and on the side of the first box facing the second box, a height space existing in the second box itself can be used to realize insertion or removal with an external tube. On one hand, difficulty in insertion and removal of the battery can be reduced. On the other hand, the battery can accommodate more battery cells without the need to provide an additional space to realize insertion or removal of the inlet tube and the outlet tube with the external tube, thereby increasing the volumetric energy density of the battery.

According to some embodiments of the present application, the first box comprises a bottom wall provided opposite to the second box in the thickness direction of the bottom wall; and both the inlet tube and the outlet tube are provided obliquely or vertically with respect to the bottom wall.

In the above solution, the insert-and-remove directions between both the inlet tube and the outlet tube and the external tube are inclined or perpendicular to the bottom wall, so that the height space of the battery can be used properly for insertion and removal, no additional space is occupied, and the energy density of the battery can be increased.

According to some embodiments of the present application, in the direction from the bottom wall towards the second box, neither the inlet tube nor the outlet tube extends beyond the second box.

In the above solution, the inlet tube and the outlet tube are provided so as not to extend beyond the second box, so that insertion and removal positions of the inlet tube and the outlet tube with the external tube are within the height range of the battery.

According to some embodiments of the present application, the flow channel is formed inside the bottom wall, and both the inlet tube and the outlet tube are provided on the bottom wall.

In the above solution, the flow channel is provided inside the bottom wall, so that the bottom wall can further adjust the temperature of the battery cell while having a function of supporting the battery cell, thereby simplifying the structure of the battery and effectively increasing the energy density of the battery.

According to some embodiments of the present application, both a connection between the inlet tube and the bottom wall and a connection between the outlet tube and the bottom wall are located outside the closed space.

In the above solution, because the connection between the inlet tube and the bottom wall and the connection between the outlet tube and the bottom wall are provided outside the closed space, it is possible to avoid providing a hole in the first box or the second box to lead the inlet tube and the outlet tube to the outside of the closed space, so that a step for sealing the hole can be reduced, and sealing performance of the battery can be improved.

According to some embodiments of the present application, the bottom wall comprises a first substrate and a second substrate that are stacked, the second substrate is provided on a side of the first substrate facing away from the second box, and the flow channel is formed between the second substrate and the first substrate.

In the above solution, the first substrate and the second substrate are stacked to form the flow channel, so that the bottom wall has a simple structure and is easy to manufacture.

According to some embodiments of the present application, a surface of the second substrate facing the first substrate is formed with a groove, and a surface of the first substrate facing the first substrate defines the flow channel jointly with the groove.

In the above solution, the groove is formed on the surface of the second substrate so as to define the flow channel jointly with the first substrate, so that the heat exchange medium can effectively adjust the temperature of the battery cell, thereby improving reliability of the battery.

According to some embodiments of the present application, the first box further comprises a first side wall provided at an edge of the bottom wall, and the first side wall is connected to the second box.

In the above solution, by providing the first side wall on the bottom wall, structural strength of the first box can be improved, and the battery can have a larger closed space to accommodate more battery cells, thereby increasing the volumetric energy density of the battery.

According to some embodiments of the present application, in the circumferential direction of the bottom wall, the first side wall has a non-closed structure.

In the above solution, the first side wall is provided to have a non-closed structure. On one hand, the first box is enabled to have specific strength to meet needs. On the other hand, when the flow channel is formed inside the bottom wall, the inlet tube and the outlet tube may be provided at portions of the bottom wall not provided with the first side wall, so as to avoid a case in which the heat exchange medium cannot flow through the inlet tube and the outlet tube due to an increase in flow resistance caused by providing the first side wall. In addition, because the first side wall is not provided at a part of the edge of the bottom wall, there is no draft angle at a position of the first box corresponding to this part (that is, the bottom wall is provided with the first side wall, and the first side wall is provided obliquely to the bottom wall), so that the battery cell is not interfered, the utilization rate of the closed space is increased, and the battery has relatively high volumetric energy density.

According to some embodiments of the present application, the bottom wall comprises a first region and a second region, the first region and the second region are provided side by side in a first direction, the first side wall is provided at an edge of the first region, an edge of the second region is not provided with the first side wall, and the first direction is perpendicular to the thickness direction of the bottom wall; and both the inlet tube and the outlet tube are located in the second region.

In the above solution, because the height space of the first box is determined by the first side wall, the inlet tube and the outlet tube are provided in the second region not provided with the first side wall, so that the height space of the first box and the height space of the second box can be used for insertion and removal with the external tube, that is, the height of the battery itself can be properly used, thereby reducing difficulty in insertion and removal.

According to some embodiments of the present application, the first region comprises a first edge and two second edges provided opposite to each other in a second direction, the first edge is connected to the two second edges, the first side wall is provided on the first edge and the two second edges, and the second direction is perpendicular to the thickness direction of the bottom wall.

In the above solution, by providing the first side wall at the first edge and the two second edges, structural strength of the first box can be improved, and structural strength of the battery can be improved, so that the battery cell has relatively high reliability.

According to some embodiments of the present application, both the two second edges extend in the first direction, and every two of the first direction, the second direction, and the thickness direction of the bottom wall are perpendicular to each other.

In the above solution, because every two of the first direction, the second direction, and the thickness direction of the bottom wall are perpendicular to each other, the first box is a square box. The square box can be manufactured more efficiently than a non-square box, manufacturing efficiency of the battery can be improved, and more battery cells can be accommodated.

According to some embodiments of the present application, the first box further comprises a first flange extending outwardly from an end of the first side wall remote from the bottom wall, and the first side wall is connected to the second box via the first flange.

In the above solution, by providing the first flange, the first side wall and the second box can be conveniently and effectively connected, so that the first side wall and the second box have a stable and sealed connection relationship, and reliability of the battery cell in the closed space is improved.

According to some embodiments of the present application, the second box comprises a top wall, a second side wall, and a second flange, the second side wall is provided at an edge of the top wall, and the second flange extends outwardly from an end of the second side wall remote from the top wall; and the second flange is connected to an edge of the bottom wall not provided with the first side wall and to the first flange.

In the above solution, in the second box, the second flange is connected to the edge of the bottom wall not provided with the first side wall and to the first flange, so that sealing performance between the first box and the second box can be improved. Meanwhile, the second side wall is provided around the edge of the top wall so as to define a cavity, thereby increasing the volume of the closed space to accommodate more battery cells, so that the battery has relatively high volumetric energy density.

According to some embodiments of the present application, the second box comprises a top wall, a second side wall, and a second flange, the second side wall is provided at a part of an edge of the top wall, and the second flange extends outwardly from an end of the second side wall remote from the top wall; and the second flange is connected to an edge of the bottom wall not provided with the first side wall, and an edge of the top wall not provided with the second side wall is connected to the first flange.

In the above solution, a main body portion of the second box has a plate shape, and a part of an edge of the main body portion is provided with the second side wall so as to correspond to a portion of the first box not provided with the first side wall, so that the second box has advantages of a simple structure and a low material cost. Meanwhile, in the second box, the second flange is connected to the edge of the bottom wall not provided with the first side wall, and the edge of the plate-shaped top wall is connected to the first flange, so that sealing performance between the first box and the second box can be improved, and reliability of the battery can be improved.

According to some embodiments of the present application, the second box comprises a top wall, a second side wall, and a second flange, the second side wall is provided at an edge of the top wall, and the second flange extends outwardly from an end of the second side wall remote from the top wall; and the second flange is provided with a first avoidance portion and a second avoidance portion, and the inlet tube and the outlet tube respectively pass through the first avoidance portion and the second avoidance portion.

In the above solution, by providing the second flange, sealing performance of the first box and the second box can be improved, and sealing performance of the battery can be improved. Impact of the inlet tube and the outlet tube on the sealing performance of the battery can be reduced by providing the first avoidance portion and the second avoidance portion to respectively avoid the inlet tube and the outlet tube.

According to some embodiments of the present application, the first avoidance portion and the second avoidance portion are notches provided at an edge of the second flange.

In the above solution, the first avoidance portion and the second avoidance portion are notches formed at the edge of the second flange, and can be easily and conveniently formed.

According to some embodiments of the present application, the battery further comprises a thermal management component, the flow channel is provided on the thermal management component, the thermal management component is provided in the closed space, and both the inlet tube and the outlet tube are provided on the thermal management component.

In the above solution, an independent thermal management component is provided to adjust the temperature of the battery cell, so that the battery has relatively high reliability.

According to a second aspect, the present application further provides an energy storage apparatus, comprising the battery according to any one of the first aspect.

According to a third aspect, the present application further provides an electric device, comprising the battery according to any one of the first aspect, wherein the battery is configured to provide electric energy.

The foregoing description is merely an overview of the technical solutions of the present application. To understand the technical means of the present application more clearly, the foregoing description may be implemented according to the content of the specification. In addition, to make the foregoing and other objectives, features, and advantages of the present application clearer and understandable, specific implementations of the present application are described in the following.

### BRIEF DESCRIPTION OF DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is a three-dimensional view of a battery according to some embodiments of the present application;
FIG. 3 is a three-dimensional exploded view of a battery according to some embodiments of the present application;
FIG. 4 is a schematic diagram of a first box, an inlet tube, and an outlet tube according to some embodiments of the present application;
FIG. 5 is a partial cross-sectional view of a first box according to some embodiments of the present application;
FIG. 6 is a three-dimensional exploded view of a battery according to some other embodiments of the present application;
FIG. 7 is a top view of a first box according to some embodiments of the present application;
FIG. 8 is an enlarged view at A in FIG. 3; and
FIG. 9 is a three-dimensional exploded view of a battery according to some other embodiments of the present application.

Reference numerals: 100-battery; 10-battery cell; 20-first box; 21-bottom wall; 22-first side wall; 23-first flange; 210-first substrate; 211-second substrate; 212-first region; 2120-first edge; 2121-second edge; 213-second region; 2110-groove; 30-second box; 31-top wall; 32-second side wall; 33-second flange; 330-first avoidance portion; 331-second avoidance portion; 40-flow channel; 50-inlet tube; 60-outlet tube; 70-thermal management component; 80-seal member; x-first direction; y-second direction; z-thickness direction; 1000-vehicle; 200-controller; and 300-motor.

### DESCRIPTION OF EMBODIMENTS

To make the objectives, technical solutions, and advantages of embodiments of the present application clearer, the following clearly describes the technical solutions in embodiments of the present application with reference to the accompanying drawings in the embodiments of the present application. Clearly, the described embodiments are some but not all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion. The terms "first", "second", and the like in the specification and claims of the present application or in the accompanying drawings are used to distinguish between different objects, and are not used to describe a specific sequence or a primary-secondary relationship. An "embodiment" in the present application means that a specific feature, structure, or characteristic described with reference to the embodiment may be included in at least one embodiment of the present application. The phrase at all places in the specification neither necessarily refers to the same embodiment, nor is a separate or alternative embodiment mutually exclusive with another embodiment. A person skilled in the art explicitly and implicitly understands that the described embodiments in the present application may be combined with another embodiment.

In the description of the present application, it should be noted that, unless explicitly specified and defined otherwise, the terms "mounted", "connected", "connect", and "attached" are to be understood in a broad sense, for example, may be fixedly connected, detachably connected, or integrally connected, may be directly connected, may be indirectly connected via an intermediate medium, or may be internal communication between two components. A person of ordinary skill in the art can understand specific meanings of these terms in the present application according to specific situations.

In the present application, the term "and/or" only describes an association relationship between associated objects, and indicates that three relationships may exist. For example, A and/or B may indicate the following three cases: A exists, both A and B exist, and B exists. In addition, the symbol "/" in the present application generally represents an "or" relationship between associated objects.

A battery mentioned in the embodiments of the present application refers to a single physical module including one or a plurality of battery cells to provide a higher voltage and capacity. For example, the battery mentioned in the present application may include one or a plurality of battery cells. The battery further includes a first box and a second box, the first box and the second box are connected to jointly define a closed space, and the battery cell is provided in the closed space to prevent liquid or another foreign matter from affecting charging or discharging of the battery cell.

In the development of battery technologies, various design factors, for example, performance parameters such as energy density, cycle life, discharge capacity, and charge/discharge rate are simultaneously taken into consideration. In addition, reliability of the battery needs to be taken into consideration. For example, thermal runaway of the battery may result in burning and explosion of the battery, which seriously affects the reliability of the battery. Thermal runaway is caused by the fact that a rate of heat generation of the battery cell is much higher than a rate of heat dissipation and a large quantity of heat is accumulated and is not dissipated in time. To improve the reliability of the battery, a flow channel is generally further included in the battery. The flow channel is configured to accommodate a heat exchange medium to adjust the temperature of the battery cell, so that the battery is in a proper temperature range, and the battery has relatively high reliability. Herein, the heat exchange medium may be fluid (liquid) or gas, and adjusting the temperature means heating or cooling a plurality of battery cells. Optionally, the fluid may be water, a mixture of water and ethylene glycol, air, or the like.

The battery may further include an inlet tube and an outlet tube, the inlet tube and the outlet tube are both in communication with the flow channel and are located outside the closed space, the inlet tube and the outlet tube are connected, through an external tube, to a storage apparatus (such as a water box) storing the heat exchange medium, the heat exchange medium enters the flow channel through the inlet tube to adjust the temperature of the battery cell, and the heat exchange medium after performing heat exchange with the battery cell can be discharged through the outlet tube, so that the heat exchange medium circulates to achieve a better temperature adjustment effect.

In the development of battery technologies, how to increase energy density of a battery is a technical problem to be solved in the battery technologies.

The inventors have found that, at present, both the inlet tube and the outlet tube of the battery are provided on a side of the battery (a side in a direction perpendicular to the height direction of the battery), that is, are laterally provided. The external tube may be inserted into or removed from the inlet tube and the outlet tube from the side of the battery in the lateral direction. When the battery is applied to an energy storage apparatus or an electric device, the energy storage apparatus or the electric device provides a small lateral space to the battery due to compact design needs. To ensure normal insertion and removal of the external tube with the inlet tube and the outlet tube, some batteries sacrifice the volume of the closed space to provide an additional insertion and removal space for the inlet tube and the outlet tube, thereby reducing the energy density of the battery.

In view of this, to increase the energy density of the battery, the inventors have intensively studied to design a battery such that both an inlet tube and an outlet tube of the battery are provided on a side of a first box facing a second box, so as to use a height space of the battery itself when an external tube is inserted or removed, without the need to provide an additional insertion and removal space, thereby enabling a battery cell to have a relatively high volumetric energy density and implementing convenient insertion and removal.

The battery disclosed in the embodiments of the present application may be, but is not limited to, used in an energy storage apparatus such as a battery cabinet and a containerized energy storage apparatus. The energy storage apparatus may include a plurality of batteries disclosed in the present application.

The battery disclosed in the embodiments of the present application may be, but not limited to, used in an electric device such as a vehicle, a ship, or an aircraft. The battery disclosed in the present application may be used to form a power source system of the electric device.

An embodiment of the present application provides an electric device using a battery as a power source, where the electric device may be, but is not limited to, a mobile phone, a tablet computer, a notebook computer, an electric toy, an electric tool, an electric bicycle, an electric motorcycle, an electric vehicle, a ship, a spacecraft, and the like. The electric toy may include a stationary or mobile electric toy, for example, a game console, an electric car toy, an electric ship toy, an electric airplane toy, and the like, and the spacecraft may include an airplane, a rocket, an aerospace plane, a spaceship, and the like.

For ease of description, the following embodiments are described by using an example in which an electric device in an embodiment of the present application is a vehicle 1000.

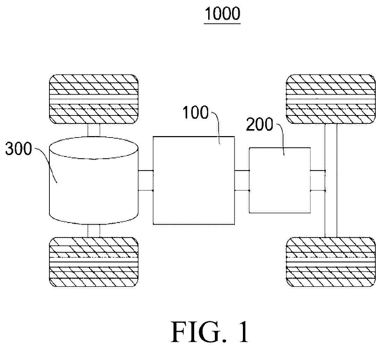

Refer to FIG. 1. FIG. 1 is a schematic structural diagram of a vehicle according to some embodiments of the present application. The vehicle 1000 may be a fuel-powered vehicle, a gas-powered vehicle, or a new energy vehicle, and the new energy vehicle may be a pure electric vehicle, a hybrid vehicle, an extended-range vehicle, or the like. A battery 100 is provided inside the vehicle 1000, and the battery 100 may be provided at the bottom or at the head or at the tail of the vehicle 1000. The battery 100 may be used for supplying power to the vehicle 1000, for example, the battery 100 may be used as an operating power source for the vehicle 1000, used for a circuitry of the vehicle 1000, for example, used for operating power requirements for starting, navigation, and running of the vehicle 1000.

The vehicle 1000 may further include a controller 200 and a motor 300, the controller 200 is configured to control the battery 100 to supply power to the motor 300, for example, be used for operating power requirements for starting, navigation, and traveling of the vehicle 1000.

In some embodiments of the present application, the battery 100 may be used not only as the operating power source of the vehicle 1000, but also as a driving power source of the vehicle 1000, to replace or partially replace fuel or natural gas to provide driving power for the vehicle 1000.

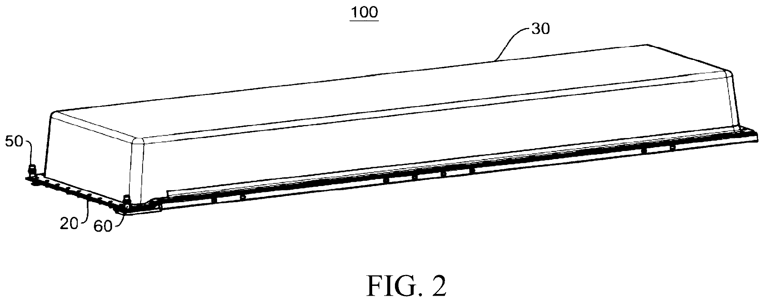

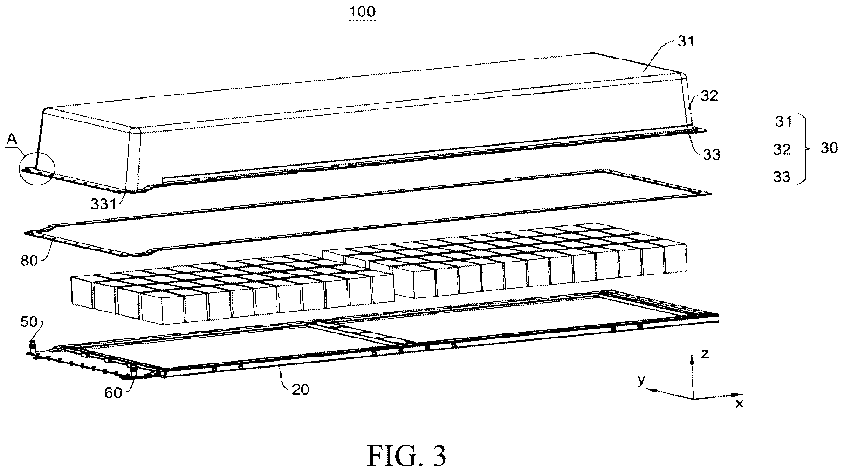

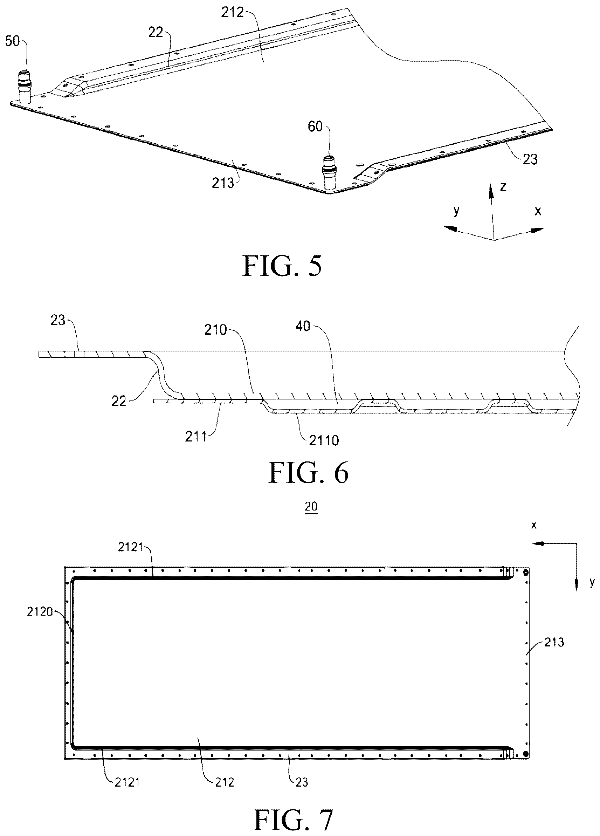

According to some embodiments of the present application, the present application provides a battery 100. Refer to FIG. 2 and FIG. 3. FIG. 2 is a three-dimensional view of a battery according to some embodiments of the present application. FIG. 3 is a three-dimensional exploded view of a battery 100 according to some embodiments of the present application. The battery 100 includes a battery cell 10, a first box 20, a second box 30, and a flow channel 40 (not shown in FIG. 3; see FIG. 6).

The first box 20 and the second box 30 are connected to each other so as to jointly define a closed space used for accommodating the battery cell 10. The flow channel 40 is configured to accommodate a heat exchange medium to adjust the temperature of the battery cell 10. The battery 100 further includes an inlet tube 50 and an outlet tube 60, the inlet tube 50 and the outlet tube 60 are both in communication with the flow channel 40, and the inlet tube 50 and the outlet tube 60 are both located on a side of the first box 20 facing the second box 30 and outside the closed space.

The first box 20 and the second box 30 are connected to each other to be able to jointly define the closed space used for accommodating the battery cell 10. The closed space refers to a portion capable of accommodating the battery cell 10, and physically isolating the battery cell 10 from the outside, so as to prevent an external contaminant from affecting the battery cell 10 and protect the battery cell 10.

The first box 20 and the second box 30 may be made of a material such as aluminum, an aluminum alloy, or stainless steel. The first box 20 and the second box 30 may be made of the same material to reduce difficulty in connecting the first box 20 and the second box 30, for example, both the first box 20 and the second box 30 are made of an aluminum alloy. The first box 20 and the second box 30 may be connected through welding or bonding, or via a fastener. The first box 20 and the second box 30 may be an upper box and a lower box of the battery 100, respectively. When the first box 20 is the lower box, the second box 30 is the upper box, and when the first box 20 is the upper box, the second box 30 is the lower box. As shown in FIG. 3, the first box 20 is located below the second box 30, and the first box 20 is the lower box.

In the battery 100, there may be one or a plurality of battery cells 10. A plurality of battery cells 10 may be connected in series, in parallel, or in a combination of both, and "in a combination of both" means that the plurality of battery cells 10 are connected both in series and in parallel. A plurality of battery cells 10 may be directly connected in series, in parallel, or in a combination of both, and the whole of the plurality of battery cells 10 is accommodated in the closed space. The battery 100 may further include another structure, for example, the battery 100 may further include a busbar component, configured to implement an electrical connection among the plurality of battery cells 10. The battery cell 10 may be a secondary battery or a primary battery, and the battery cell 10 may further be a lithium-sulfur battery, a sodium-ion battery, or a magnesium-ion battery, but is not limited thereto.

The flow channel 40 may refer to a portion capable of accommodating a heat exchange medium and implementing the flow of the heat exchange medium. The heat exchange medium may be fluid (liquid) or gas, and adjusting the temperature refers to exchanging heat with the battery cell 10, absorbing heat of the battery cell 10, cooling the battery cell 10, or supplying heat to the battery cell 10 to heat the battery cell 10. Optionally, the fluid may be water, a mixture of water and ethylene glycol, air, or the like.

The inlet tube 50 and the outlet tube 60 are components communicating with the flow channel 40, and the inlet tube 50 and the outlet tube 60 may be separately connected to an external tube, so that the heat exchange medium enters the flow channel 40 through the inlet tube 50 and is discharged from the flow channel 40 through the outlet tube 60. The inlet tube 50 and the outlet tube 60 may be connected to the external tube in an insert-and-remove manner. One end of the inlet tube 50 communicates with the flow channel 40, the other end thereof is an open end, and the orientation of the open end may be an insert-and-remove direction between the inlet tube 50 and the external tube. One end of the outlet tube 60 communicates with the flow channel 40, the other end thereof is an open end, and the orientation of the open end may be an insert-and-remove direction between the outlet tube 60 and the external tube. In some embodiments, the external tube may be a tubular structure such as a hose, a rigid tube, or a steel tube capable of conveying the heat exchange medium.

In some embodiments, at least a part of the flow channel 40 is located in the closed space to adjust the temperature of the battery cell 10 located in the closed space. The inlet tube 50 and the outlet tube 60 are located outside the closed space to be connected to the external tube.

"The inlet tube 50 and the outlet tube 60 are both located on the side of the first box 20 facing the second box 30" may be understood as that the insert-and-remove directions between both the inlet tube 50 and the outlet tube 60 and the external tube are in a direction facing the second box 30 with respect to the first box 20.

"The side of the first box 20 facing the second box 30" may be understood as using an intersection interface between the first box 20 and the second box 30 as a base plane and being not parallel to the base plane. For ease of understanding, refer to FIG. 3. In FIG. 3, x may be considered as pointing to the length direction of the first box 20, and y may be considered as pointing to the width direction of the first box 20. The inlet tube 50 and the outlet tube 60 of the conventional battery 100 are provided in the x or y direction, that is, provided laterally. Alternatively, this may be understood as that the inlet tube 50 and the outlet tube 60 are provided in parallel to the horizontal plane. However, in some embodiments of the present application, the inlet tube 50 and the outlet tube 60 are not provided in the x or y direction. That is, this may be understood as that the inlet tube 50 and the outlet tube 60 are not provided in parallel to the horizontal plane.

In the above solution, the inlet tube 50 and the outlet tube 60 of the battery 100 are located outside the closed space and on the side of the first box 20 facing the second box 30, a height space existing in the second box 30 itself can be used to realize insertion and removal with an external tube. On one hand, difficulty in insertion and removal of the battery 100 can be reduced. On the other hand, the battery 100 can accommodate more battery cells 10 without the need to provide an additional space to realize insertion and removal of the inlet tube 50 and the outlet tube 60 with the external tube, thereby increasing the volumetric energy density of the battery 100.

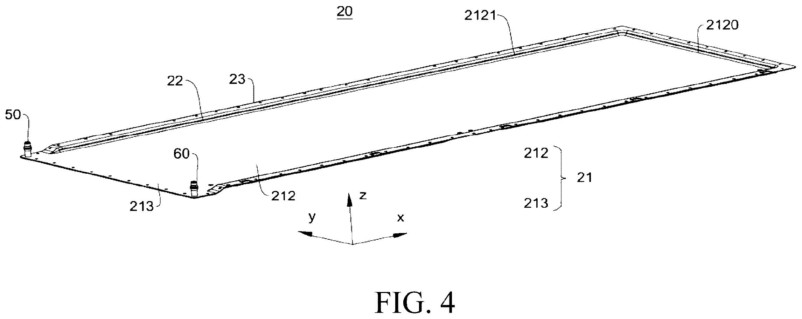

According to some embodiments of the present application, refer to FIG. 4 and FIG. 5. FIG. 4 is a schematic diagram of a first box 20, an inlet tube 50, and an outlet tube 60 according to some embodiments of the present application. FIG. 5 is a partial schematic diagram of a battery 100 according to some embodiments of the present application. The first box 20 includes a bottom wall 21 provided opposite to the second box 30 in the thickness direction z of the bottom wall 21. Both the inlet tube 50 and the outlet tube 60 are provided obliquely or vertically with respect to the bottom wall 21.

The bottom wall 21 is a main body portion of the first box 20, the bottom wall 21 and the second box 30 are provided opposite to each other, and the thickness direction z of the bottom wall 21 may be the height direction of the battery 100.

"Both the inlet tube 50 and the outlet tube 60 are provided obliquely or vertically with respect to the bottom wall 21" may mean that the axes of the inlet tube 50 and the outlet tube 60 are provided obliquely or vertically with respect to the bottom wall 21. When the external tube is inserted or removed, the direction of at least a part of an insertion or removal force is in the height direction of the battery 100.

In the above solution, the insert-and-remove directions between both the inlet tube 50 and the outlet tube 60 and the external tube are inclined or perpendicular to the bottom wall 21, so that the height space of the battery 100 can be used properly for insertion and removal, no additional space is occupied, and the volumetric energy density of the battery 100 can be increased.

According to some embodiments of the present application, referring to FIG. 3, in the direction from the bottom wall 21 towards the second box 30, neither the inlet tube 50 nor the outlet tube 60 extends beyond the second box 30.

In the above solution, the inlet tube 50 and the outlet tube 60 are provided so as not to extend beyond the second box 30, so that insertion and removal positions of the inlet tube 50 and the outlet tube 60 with the external tube are within the height range of the battery 100. Therefore, the height space of the battery 100 itself can be used properly, and difficulty in insertion and removal can be reduced.

According to some embodiments of the present application, refer to FIG. 6. FIG. 6 is a partial cross-sectional view of a first box 20 according to some embodiments of the present application. The flow channel 40 is formed inside the bottom wall 21, and both the inlet tube 50 and the outlet tube 60 are provided on the bottom wall 21.

"The flow channel 40 is formed inside the bottom wall 21" may mean that the bottom wall 21 is integrated with the flow channel 40, and the bottom wall 21 may serve not only as a component for supporting the battery cell 10 but also as a component for accommodating the heat exchange medium to adjust the temperature of the battery cell 10. Both the inlet tube 50 and the outlet tube 60 are provided on the bottom wall 21 and communicate with the flow channel 40 inside the bottom wall 21.

In the above solution, the flow channel 40 is provided inside the bottom wall 21, so that the bottom wall 21 can further adjust the temperature of the battery cell 10 while having a function of supporting the battery cell 10, thereby simplifying the structure of the battery 100 and effectively increasing the volumetric energy density of the battery 100.

According to some embodiments of the present application, both a connection between the inlet tube 50 and the bottom wall 21 and a connection between the outlet tube 60 and the bottom wall 21 are located outside the closed space.

In some embodiments, refer to FIG. 5. Both the inlet tube 50 and the outlet tube 60 are straight tubes, a position of an end of the inlet tube 50 remote from an opening thereof may be considered as the connection between the inlet tube 50 and the bottom wall 21, and a position of an end of the outlet tube 60 remote from an opening thereof may be considered as the connection between the outlet tube 60 and the bottom wall 21.

In some embodiments, the surface of the bottom wall 21 may be formed with two through-holes communicating with the flow channel 40 inside the bottom wall 21, the two through-holes correspond to the inlet tube 50 and the outlet tube 60, the inlet tube 50 is provided on the bottom wall 21 and communicates with the flow channel 40 through a corresponding through-hole, and the outlet tube 60 is provided on the bottom wall 21 and communicates with the flow channel 40 through a corresponding through-hole. The connection between the inlet tube 50 and the bottom wall 21 and the connection between the outlet tube 60 and the bottom wall 21 may refer to the through-holes formed on the surface of the bottom wall 21. Because the through-holes are located outside the closed space, the inlet tube 50 and the outlet tube 60 may be provided on the bottom wall 21 outside the closed space.

In the above solution, because the connection between the inlet tube 50 and the bottom wall 21 and the connection between the outlet tube 60 and the bottom wall 21 are provided outside the closed space, it is possible to avoid providing a hole in the first box 20 or the second box 30 to lead the inlet tube 50 and the outlet tube 60 to the outside of the closed space, so that a step for sealing the hole can be reduced, and sealing performance of the battery 100 can be improved.

In some other embodiments, both the connection between the inlet tube 50 and the bottom wall 21 and the connection between the outlet tube 60 and the bottom wall 21 may be located in the closed space, and a part of each of the inlet tube 50 and the outlet tube 60 is located in the closed space, and the other part thereof passes through the first box 20 or the second box 30 to be located outside the closed space to connect to the external tube.

According to some embodiments of the present application, as shown in FIG. 6, the bottom wall 21 includes a first substrate 210 and a second substrate 211 that are stacked, the second substrate 211 is provided on a side of the first substrate 210 facing away from the second box 30, and the flow channel 40 is formed between the second substrate 211 and the first substrate 210.

In the thickness direction z of the bottom wall 21, the first substrate 210 and the second substrate 211 are stacked to form therebetween the flow channel 40 for accommodating the heat exchange medium. The first substrate 210 is closer to the second box 30 than the second substrate 211, and the inlet tube 50 and the outlet tube 60 may be provided on a surface of the first substrate 210 facing away from the second substrate 211 and communicate with the flow channel 40. The first substrate 210 and the second substrate 211 may be connected to each other through bonding or welding.

In the above solution, the first substrate 210 and the second substrate 211 are stacked to form the flow channel 40, so that the bottom wall 21 has a simple structure and is easy to manufacture.

In other embodiments, the flow channel 40 may be formed inside the bottom wall 21 through integral molding.

According to some embodiments of the present application, as shown in FIG. 6, a surface of the second substrate 211 facing the first substrate 210 is formed with a groove 2110, and a surface of the first substrate 210 facing the first substrate 210 defines the flow channel 40 jointly with the groove 2110.

The surface of the second substrate 211 facing the first substrate 210 may be an inner wall surface of the bottom wall 21, and the groove 2110 may be provided on the inner wall surface to form the flow channel 40 for the heat exchange medium to flow through, thereby achieving temperature adjustment of the battery cell 10. In some embodiments, the surface of the first substrate 210 facing the second substrate 211 may be a flat surface. In some other embodiments, the surface of the first substrate 210 facing the second substrate 211 may alternatively be provided with a groove 2110 to be provided opposite to the groove 2110 on the second substrate 211. To ensure that the first substrate 210 can stably support the battery cell 10, the surface of the first substrate 210 facing away from the second substrate 211 may be a flat surface.

In the above solution, the groove 2110 is formed on the surface of the second substrate 211 so as to define the flow channel 40 jointly with the first substrate 210, so that the heat exchange medium can effectively adjust the temperature of the battery cell 10, thereby improving the reliability of the battery 100.

According to some embodiments of the present application, referring to FIG. 5 and FIG. 6, the first box 20 further includes a first side wall 22 provided at an edge of the bottom wall 21, and the first side wall 22 is connected to the second box 30.

The first side wall 22 is a component that protrudes from the bottom wall 21 in the thickness direction z of the bottom wall 21 and is connected to the edge of the bottom wall 21. An end of the first side wall 22 remote from the bottom wall 21 may be connected to the second box 30.

In the above solution, by providing the first side wall 22 on the bottom wall 21, structural strength of the first box 20 can be improved, and the battery 100 can have a larger closed space to accommodate more battery cells 10, thereby increasing the volumetric energy density of the battery 100.

According to some embodiments of the present application, referring to FIG. 4 and FIG. 5, in the circumferential direction of the bottom wall 21, the first side wall 22 has a non-closed structure. "The first side wall 22 has a non-closed structure" may mean that a part of the edge of the bottom wall 21 is not provided with the first side wall 22, so that the front and rear ends of the first side wall 22 are not closed, or in other words, so that the first side wall 22 is provided only on a part of the edge of the bottom wall 21.

In the above solution, the first side wall 22 is provided to have a non-closed structure. On one hand, the first box 20 is enabled to have specific strength to meet needs. On the other hand, when the flow channel 40 is formed inside the bottom wall 21, the inlet tube 50 and the outlet tube 60 may be provided at portions of the bottom wall 21 not provided with the first side wall 22, so as to avoid a case in which the heat exchange medium cannot flow through the inlet tube 50 and the outlet tube 60 due to an increase in flow resistance caused by providing the first side wall 22 (if the inlet tube 50 and the outlet tube 60 are provided on the first side wall 22, the flow resistance is too large due to a difference in height between the first side wall 22 and the bottom wall 21). In addition, because the first side wall 22 is not provided at a part of the edge of the bottom wall 21, there is no draft angle at a position of the first box 20 corresponding to this part, so that the battery cell 10 is not interfered, the utilization rate of the closed space is increased, and the battery 100 has relatively high volumetric energy density.

According to some embodiments of the present application, refer to FIG. 7. FIG. 7 is a top view of a first box 20 according to some embodiments of the present application. The bottom wall 21 includes a first region 212 and a second region 213, the first region 212 and the second region 213 are provided side by side in a first direction x, the first side wall 22 is provided at an edge of the first region 212, an edge of the second region 213 is not provided with the first side wall 22, and the first direction x is perpendicular to the thickness direction z of the bottom wall 21. Both the inlet tube 50 and the outlet tube 60 are located in the second region 213.

Referring to FIG. 7, the first box 20 may be a square box, the first direction x may be the length direction of the first box 20, and the first region 212 and the second region 213 are two regions provided side by side in the length direction of the first box 20. The first region 212 and the second region 213 may each have a square shape, and the edge of the first region 212 and the edge of the second region 213 jointly constitute the edge of the bottom wall 21. The edge of the first region 212 is provided with the first side wall 22, and the edge of the second region 213 is not provided with the first side wall 22.

That both the inlet tube 50 and the outlet tube 60 are located in the second region 213 may mean that portions of the inlet tube 50 and the outlet tube 60 located on the bottom wall 21 are not provided with the first side wall 22.

In the above solution, because the height space of the first box 20 is determined by the first side wall 22, the inlet tube 50 and the outlet tube 60 are provided in the second region 213 not provided with the first side wall 22, so that the height space of the first box 20 and the height space of the second box 30 can be used for insertion and removal with the external tube, that is, the height of the battery 100 itself can be properly used, thereby reducing difficulty in insertion and removal.

According to some embodiments of the present application, as shown in FIG. 7, the first region 212 includes a first edge 2120 and two second edges 2121 provided opposite to each other in a second direction y, the first edge 2120 is connected to the two second edges 2121, the first side wall 22 is provided on the first edge 2120 and the two second edges 2121, and the second direction y is perpendicular to the thickness direction z of the bottom wall 21.

The second direction y is perpendicular to the thickness direction z of the bottom wall 21, and in some embodiments, the second direction y may be the width direction of the first box 20. In the second direction y, the two second edges 2121 are provided opposite each other, and the first edge 2120 is located between the two second edges 2121 and connected to the two first edges 2120, presenting a U-shape. In some embodiments, an end portion of the second edge 2121 remote from the first edge 2120 is connected to the edge of the second region 213. "The first side wall 22 is provided at the first edge 2120 and the two second edges 2121" may mean that the first side wall 22 is provided at three edges (the first edge 2120 and the two second edges 2121) of the first region 212 to present a U-shaped non-closed structure.

In the above solution, by providing the first side wall 22 at the first edge 2120 and the two second edges 2121, structural strength of the first box 20 can be improved, and structural strength of the battery 100 can be improved, so that the battery cell 10 has relatively high reliability.

In some embodiments, the inlet tube 50 and the outlet tube 60 may be provided at corners of the second region 213 to reduce impact of a space of a closed region corresponding to the second region 213.

According to some embodiments of the present application, both the two second edges 2121 extend in the first direction x, and every two of the first direction x, the second direction y, and the thickness direction z of the bottom wall 21 are perpendicular to each other.

In the above solution, because every two of the first direction x, the second direction y, and the thickness direction z of the bottom wall 21 are perpendicular to each other, the first box 20 is a square box. The square box can be manufactured more efficiently than a non-square box, manufacturing efficiency of the battery 100 can be improved, and more battery cells 10 can be accommodated.

According to some embodiments of the present application, referring to FIG. 6, the first box 20 further includes a first flange 23 extending outwardly from an end of the first side wall 22 remote from the bottom wall 21, and the first side wall 22 is connected to the second box 30 via the first flange 23.

In some embodiments, the first flange 23 may be formed on the first substrate 210 by rolling or bending.

The first flange 23 may refer to a portion that extends outwardly from the end of the first side wall 22 remote from the bottom wall 21 and is horizontal or nearly horizontal to provide a relatively large contact surface for the second box 30.

In the above solution, by providing the first flange 23, the first side wall 22 and the second box 30 can be conveniently and effectively connected, so that the first side wall 22 and the second box 30 have a stable and sealed connection relationship, and reliability of the battery cell 10 in the closed space is improved.

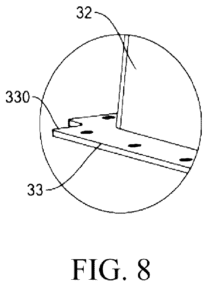

According to some embodiments of the present application, with reference to FIG. 3 and FIG. 8, FIG. 8 is an enlarged view at A in FIG. 3. The second box 30 includes a top wall 31, a second side wall 32, and a second flange 33, the second side wall 32 is provided at an edge of the top wall 31, and the second flange 33 extends outwardly from an end of the second side wall 32 remote from the top wall 31; and the second flange 33 is connected to an edge of the bottom wall 21 not provided with the first side wall 22 and to the first flange 23.

The top wall 31 may be a main body portion of the second box 30, and may be provided opposite to the bottom wall 21, and a direction from the top wall 31 to the bottom wall 21 may be the height direction of the battery 100.

The second side wall 32 may be provided around the edge of the top wall 31 and form a closed structure, that is, the second side wall 32 is provided around the edge of the top wall 31. Because the second side wall 32 is provided around the edge of the top wall 31, a cavity is formed inside the second box 30. When the second box 30 and the first box 20 are connected to each other, the cavity is a part of the closed space.

The second flange 33 may refer to a portion that extends outwardly from the end of the second side wall 32 remote from the top wall 31 and is horizontal or nearly horizontal to provide a relatively large contact surface for the first box 20.

In the above solution, in the second box 30, the second flange 33 is connected to the edge of the bottom wall 21 not provided with the first side wall 22 and to the first flange 23, so that sealing performance between the first box 20 and the second box 30 can be improved. Meanwhile, the second side wall 32 is provided around the edge of the top wall 31 so as to define a cavity, thereby increasing the volume of the closed space to accommodate more battery cells 10, so that the battery 100 has relatively high volumetric energy density.

According to some other embodiments of the present application, the second box 30 includes a top wall 31, a second side wall 32, and a second flange 33, the second side wall 32 is provided at a part of an edge of the top wall 31, and the second flange 33 extends outwardly from an end of the second side wall 32 remote from the top wall 31. The second flange 33 is connected to an edge of the bottom wall 21 not provided with the first side wall 22, and an edge of the top wall 31 not provided with the second side wall 32 is connected to the first flange 23.

The second side wall 32 may be provided around a part of the edge of the top wall 31 and has a non-closed structure, and the second side wall 32 corresponds to a portion of the bottom wall 21 not provided with the first side wall 22. The second flange 33 may refer to a portion that extends outwardly from the end of the second side wall 32 remote from the top wall 31 and is horizontal or nearly horizontal to provide a relatively large contact surface for the first box 20.

In the above solution, a main body portion of the second box 30 has a plate shape, and a part of an edge of the main body portion is provided with the second side wall 32 so as to correspond to a portion of the first box 20 not provided with the first side wall 22, so that the second box 30 has advantages of a simple structure and a low material cost. Meanwhile, in the second box 30, the second flange 33 is connected to the edge of the bottom wall 21 not provided with the first side wall 22, and the edge of the plate-shaped top wall 31 is connected to the first flange 23, so that sealing performance between the first box 20 and the second box 30 can be improved, and reliability of the battery 100 can be improved.

According to some embodiments of the present application, with reference to FIG. 8, FIG. 8 shows only a first avoidance portion 330, and the structure of a second avoidance portion 331 may be the same as the structure of the first avoidance portion 330. For understanding of the second avoidance portion 331, refer to FIG. 8. The second box 30 includes a top wall 31, a second side wall 32, and a second flange 33, the second side wall 32 is provided at an edge of the top wall 31, and the second flange 33 extends outwardly from an end of the second side wall 32 remote from the top wall 31. The second flange 33 is provided with the first avoidance portion 330 and the second avoidance portion 331, and the inlet tube 50 and the outlet tube 60 respectively pass through the first avoidance portion 330 and the second avoidance portion 331.

The first avoidance portion 330 is a portion provided on the second flange 33 and configured to avoid the inlet tube 50. When the first box 20 and the second box 30 are connected to each other, the inlet tube 50 can pass through via the first avoidance portion 330 so as not to affect sealing performance of the second flange 33 and the first box 20. The second avoidance portion 331 is a portion provided on the second flange 33 and configured to avoid the outlet tube 60. When the first box 20 and the second box 30 are connected to each other, the outlet tube 60 can pass through via the second avoidance portion 331 so as not to affect sealing performance of the second flange 33 and the first box 20.

In some embodiments, a seal member 80 is provided between the first flange 23 and the second flange 33, and because the second flange 33 is provided with the first avoidance portion 330 and the second avoidance portion 331, the seal member 80 may be provided with an avoidance structure correspondingly. The seal member 80 has a ring shape and is provided around the edge of the closed space to improve sealing performance of the first flange 23 and the second box 30 and sealing performance of the second flange 33 and the first box 20. The seal member 80 may be a rubber ring.

According to some embodiments of the present application, refer to FIG. 8. The first avoidance portion 330 and the second avoidance portion 331 are notches provided at the edge of the second flange 33.

The notch may be recessed inward from the edge of the second flange 33 to form a portion capable of allowing the inlet tube 50 or the outlet tube 60 to pass through.

In the above solution, the first avoidance portion 330 and the second avoidance portion 331 are notches formed at the edge of the second flange 33, and can be easily and conveniently formed.

In some embodiments, an edge of the seal member 80 is also correspondingly provided with notches to avoid the inlet tube 50 and the outlet tube 60.

In some other embodiments, the first avoidance portion 330 and the second avoidance portion 331 may be through-holes provided at the edge of the second flange 33.

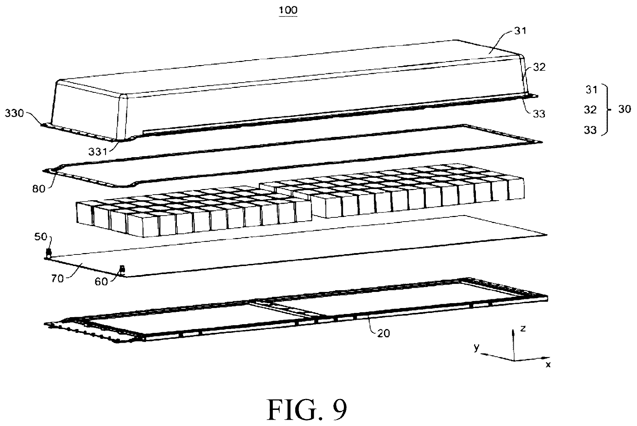

According to some other embodiments of the present application, refer to FIG. 9. FIG. 9 is a three-dimensional exploded view of a battery 100 according to some other embodiments of the present application. The battery 100 further includes a thermal management component 70, the flow channel 40 is provided on the thermal management component 70, the thermal management component 70 is provided in the closed space, and both the inlet tube 50 and the outlet tube 60 are provided on the thermal management component 70.

The thermal management component 70 may be a component independent from the bottom wall 21, and the thermal management component 70 is a separate component and is configured to adjust the temperature of the battery cell 10. In some embodiments, as shown in FIG. 9, the thermal management component 70 may have a plate shape with the flow channel 40 formed therein to accommodate and allow the heat exchange medium to flow. The inlet tube 50 and the outlet tube 60 are provided on the surface of the heat exchange medium and located on a side of the first box 20 facing the second box 30. The thermal management component 70 may be provided on the bottom wall 21, and the battery cell 10 may be provided on a surface of the thermal management component 70 remote from the bottom wall 21.

In some embodiments, a part of the thermal management component 70 is located in the closed space and the other part thereof passes through the first box 20 or the second box 30 to expose the inlet tube 50 and the outlet tube 60 to the outside of the closed space. In some other embodiments, the thermal management component 70 is located in the closed space, and the inlet tube 50 and the outlet tube 60 may pass through the second box 30.

In the above solution, an independent thermal management component 70 is provided to adjust the temperature of the battery cell 10, so that the battery 100 has relatively high reliability.

According to some embodiments of the present application, the present application further provides an energy storage apparatus, including the battery 100 described above. In some embodiments, the energy storage apparatus may be an energy storage cabinet that includes a cabinet body and a plurality of batteries 100 that are provided in the cabinet body and can jointly provide electric energy to an electric device.

According to some embodiments of the present application, the present application further provides an electric device including the battery 100 described above, and the battery 100 is configured to provide electric energy.

According to some embodiments of the present application, the present application further provides a battery 100. Refer to FIG. 3 to FIG. 8. The battery 100 includes a battery cell 10, a first box 20, a second box 30, a seal member 80, an inlet tube 50, and an outlet tube 60. The first box 20 is a lower box of the battery 100, and the second box 30 is an upper box of the battery 100. The first box 20 includes a bottom wall 21, a first side wall 22, and a first flange 23. The bottom wall 21 has a square shape and includes a first region 212 and a second region 213 provided side by side in the length direction of the first box 20, the first region 212 and the second region 213 each have a square shape, the first side wall 22 is provided at an edge of the first region 212, an edge of the second region 213 is not provided with the first side wall 22, and the first flange 23 extends outwardly from an end of the first side wall 22 remote from the bottom wall 21. The bottom wall 21 of the first box 20 includes a first substrate 210 and a second substrate 211 that are stacked, the second substrate 211 is provided on a side of the first substrate 210 facing away from the second box 30, and the first side wall 22 is formed at an edge of the first substrate 210. A surface of the second substrate 211 facing the first substrate 210 is formed with a groove 2110, and a surface of the first substrate 210 facing the first substrate 210 defines a flow channel 40 jointly with the groove 2110. The inlet tube 50 and the outlet tube 60 are provided on the first substrate 210 and communicate with the flow channel 40. The inlet tube 50 and the outlet tube 60 are respectively located at two corners of the second region 213 and perpendicular to the first substrate 210, and open ends of the inlet tube 50 and the outlet tube 60 face the second box 30 in the height direction of the battery 100. The inlet tube 50 and the outlet tube 60 may be connected to an external tube, and an operator or a mechanical arm may insert or remove the external tube by applying a force perpendicular to the first substrate 210. The external tube may convey a heat exchange medium to the flow channel 40 through the inlet tube 50, and may discharge the heat exchange medium in the flow channel 40 through the outlet tube 60. The bottom wall 21 supports the battery cell 10, and the temperature of the battery 100 can be adjusted by using the heat exchange medium. A connection between the inlet tube 50 and the bottom wall 21 and a connection between the outlet tube 60 and the bottom wall 21 are located outside the closed space and at corners of the first region 212.

The second box 30 includes a top wall 31, a second side wall 32, and a second flange 33, the second side wall 32 is provided at an edge of the top wall 31 and surrounds the top wall 31, and the second flange 33 extends outwardly from an end of the second side wall 32 remote from the top wall 31. The second flange 33 may be connected to the edge of the first region 212 of the bottom wall 21 and to the first flange 23 through welding, bonding, or bolting, and the seal member 80 is provided at a connection between the first box 20 and the second box 30 to improve sealing performance of the connection between the first box 20 and the second box 30. The first box 20 and the second box 30 are connected to each other to jointly form a closed space, the battery cell 10 is provided in the closed space and located in the first region 212, and electronic components of the battery 100, such as a BMS (Battery Management System), may be provided on the second region 213. The second flange 33 is provided with notches to avoid the inlet tube 50 and the outlet tube 60.

The foregoing descriptions are merely preferred embodiments of the present application, and are not intended to limit the present application. For a person skilled in the art, various modifications and changes may be made in the present application. Any modification, equivalent replacement, or improvement made without departing from the spirit and principle of the present application shall fall within the protection scope of the present application.

## Claims

1. A battery, comprising a battery cell, a first box, a second box, and a flow channel;
wherein the first box and the second box are connected to each other so as to jointly define a closed space used for accommodating the battery cell, and the flow channel is configured to accommodate a heat exchange medium so as to adjust the temperature of the battery cell; and
the battery further comprises an inlet tube and an outlet tube, the inlet tube and the outlet tube are both in communication with the flow channel, and the inlet tube and the outlet tube are both located on a side of the first box facing the second box and outside the closed space.

2. The battery according to claim 1, wherein
the first box comprises a bottom wall provided opposite to the second box in the thickness direction of the bottom wall; and
both the inlet tube and the outlet tube are provided obliquely or vertically with respect to the bottom wall.

3. The battery according to claim 2, wherein
in the direction from the bottom wall towards the second box, neither the inlet tube nor the outlet tube extends beyond the second box.

4. The battery according to claim 2 or 3, wherein
the flow channel is formed inside the bottom wall, and both the inlet tube and the outlet tube are provided on the bottom wall.

5. The battery according to claim 4, wherein
both a connection between the inlet tube and the bottom wall and a connection between the outlet tube and the bottom wall are located outside the closed space.

6. The battery according to claim 5, wherein
the bottom wall comprises a first substrate and a second substrate that are stacked, the second substrate is provided on a side of the first substrate facing away from the second box, and the flow channel is formed between the second substrate and the first substrate.

7. The battery according to claim 6, wherein
a surface of the second substrate facing the first substrate is formed with a groove, and a surface of the first substrate facing the first substrate defines the flow channel jointly with the groove.

8. The battery according to any one of claims 2 to 7, wherein
the first box further comprises a first side wall provided at an edge of the bottom wall, and the first side wall is connected to the second box.

9. The battery according to claim 8, wherein
in the circumferential direction of the bottom wall, the first side wall has a non-closed structure.

10. The battery according to claim 8 or 9, wherein
the bottom wall comprises a first region and a second region, the first region and the second region are provided side by side in a first direction, the first side wall is provided at an edge of the first region, an edge of the second region is not provided with the first side wall, and the first direction is perpendicular to the thickness direction of the bottom wall; and
both the inlet tube and the outlet tube are located in the second region.

11. The battery according to claim 10, wherein
the first region comprises a first edge and two second edges provided opposite to each other in a second direction, the first edge is connected to the two second edges, the first side wall is provided on the first edge and the two second edges, and the second direction is perpendicular to the thickness direction of the bottom wall.

12. The battery according to claim 11, wherein
both the two second edges extend in the first direction, and every two of the first direction, the second direction, and the thickness direction of the bottom wall are perpendicular to each other.

13. The battery according to any one of claims 10 to 12, wherein
the first box further comprises a first flange extending outwardly from an end of the first side wall remote from the bottom wall, and the first side wall is connected to the second box via the first flange.

14. The battery according to claim 13, wherein
the second box comprises a top wall, a second side wall, and a second flange, the second side wall is provided at an edge of the top wall, and the second flange extends outwardly from an end of the second side wall remote from the top wall; and
the second flange is connected to an edge of the bottom wall not provided with the first side wall and to the first flange.

15. The battery according to claim 13, wherein
the second box comprises a top wall, a second side wall, and a second flange, the second side wall is provided at a part of an edge of the top wall, and the second flange extends outwardly from an end of the second side wall remote from the top wall; and
the second flange is connected to an edge of the bottom wall not provided with the first side wall, and an edge of the top wall not provided with the second side wall is connected to the first flange.

16. The battery according to any one of claims 13 to 15, wherein
the second box comprises a top wall, a second side wall, and a second flange, the second side wall is provided at an edge of the top wall, and the second flange extends outwardly from an end of the second side wall remote from the top wall; and
the second flange is provided with a first avoidance portion and a second avoidance portion, and the inlet tube and the outlet tube respectively pass through the first avoidance portion and the second avoidance portion.

17. The battery according to claim 16, wherein
the first avoidance portion and the second avoidance portion are notches provided at an edge of the second flange.

18. The battery according to any one of claims 1 to 17, wherein
the battery further comprises a thermal management component, the flow channel is provided on the thermal management component, a part of the thermal management component is provided in the closed space, and both the inlet tube and the outlet tube are connected to the thermal management component.

19. An energy storage apparatus, comprising the battery according to any one of claims 1 to 18.

20. An electric device, comprising the battery according to any one of claims 1 to 18, wherein the battery is configured to provide electric energy.
